# EUROPEAN PATENT APPLICATION

(11) **EP 4 559 626 A1**
(43) Date of publication of application: **28.05.2025**
(21) Application number: 24759474.0
(22) Date of filing: 24.01.2024
(51) Int. Cl.: B25C 1/06

(54) **CORDLESS FASTENING TOOL**

(30) Priority: 24.02.2023 CN 202310166200
(71) Applicant: Nanjing Chervon Industry Co., Ltd., Nanjing, Jiangsu 211106 (CN)
(72) Inventor: YE, Junjie, Nanjing, Jiangsu 211106 (CN); ZHANG, Zhiqiang, Nanjing, Jiangsu 211106 (CN); YAN, Weikang, Nanjing, Jiangsu 211106 (CN)
(74) Representative: Sun, Yiming
(86) International application number: PCT/CN2024/073771
(87) International publication number: WO 2024/174796

(57) **Abstract**

Provided is a cordless fastening tool, relating to the technical field of power tools. The cordless fastening tool includes a housing (1); a magazine (2) configured to accommodate fasteners; a firing device (3) configured to guide the fasteners along a first direction; a battery pack (4); and a battery pack mounting portion (5) connected to the housing (1) and configured to detachably support the battery pack (4). The battery pack (4) is configured to be mounted to the battery pack mounting portion (5) along a second direction (20) perpendicular to the first direction (10).

## Description

This application claims priority to Chinese Patent Application No. 202310166200.3 filed with the China National Intellectual Property Administration (CNIPA) on Feb. 24, 2023, the disclosure of which is incorporated herein by reference in its entirety.

### TECHNICAL FIELD

The present application relates to the technical field of power tools, for example, a cordless fastening tool.

### BACKGROUND

A nail gun is a commonly used cordless fastening tool. The nail gun can use high-pressure gas to drive the firing pin in the cylinder of the nail gun to perform a hammering motion, thereby driving the collated nails in the magazine into an object or driving the collated nails out. The nail gun includes a housing, a firing device, and a battery pack. When the nail gun is working, the firing device is used for driving nails out, and the battery pack provides power for the firing device. When the nail gun is left standing after use, the downwardly facing surface of the battery pack serves as the support surface for the nail gun. In the related art, the battery pack is mounted on the housing through insertion approximately along the firing direction of the nail gun, and the dimension of the battery pack along the insertion direction is relatively large, so the support center of the battery pack is closer to the rear, while the center of gravity of a gas structure on the upper part of the nail gun is closer to the front, resulting in poor stability of the nail gun when standing.

Therefore, a cordless fastening tool is urgently needed to solve the preceding technical problem.

### SUMMARY

An object of the present application is to provide a cordless fastening tool. The cordless fastening tool has good stability when standing, a battery pack is not likely to interfere with the arm of the user, and the cordless fastening tool is convenient to operate.

To achieve the object, the present application adopts the technical solutions below.

A cordless fastening tool includes a housing; a magazine configured to accommodate fasteners; a firing device configured to guide the fasteners along a first direction; a battery pack; and a battery pack mounting portion connected to the housing and configured to detachably support the battery pack. The battery pack is configured to be mounted to the battery pack mounting portion along a second direction perpendicular to the first direction.

In some examples, the housing includes a grip, the grip extends along a third direction, the first direction and the third direction form a first plane, and the second direction is perpendicular to the first plane.

In some examples, the housing includes a grip, the grip extends along a third direction, and the first direction and the third direction form a first plane; and along a direction perpendicular to the first plane, the length of the battery pack is B1, the length of the cordless fastening tool is B2, and the ratio of B1 to B2 is greater than or equal to 0.6 and less than or equal to 0.8.

In some examples, the cordless fastening tool includes a motor, where a first rotation axis of the motor is defined, the housing has a housing centerline along the left and right direction, the battery pack has a battery pack centerline along the left and right direction, and the first rotation axis and the battery pack centerline are located on the same side of the housing centerline.

In some examples, the distance between the battery pack centerline and the housing centerline is L3, the distance between the first rotation axis and the housing centerline is L4, and the ratio of L3 to L4 is greater than or equal to 0 and less than or equal to 0.5.

In some examples, the housing includes a first accommodation portion and the grip, the first accommodation portion extends along the first direction, the firing device is at least partially accommodated in the first accommodation portion, an end of the grip is connected to the first accommodation portion, and the battery pack mounting portion is connected to the other end of the grip.

In some examples, along the first direction and away from a firing end of the cordless fastening tool, the length L1 of the portion of the first accommodation portion protruding from the grip is greater than or equal to the length L2 of the portion of the battery pack protruding from the grip.

In some examples, along the first direction and away from a firing end of the cordless fastening tool, the length of the portion of the battery pack protruding from the grip is L2, where L2 is less than or equal to 60 mm.

In some examples, in the case where the cordless fastening tool is standing, an included angle between a rear side surface of the battery pack and an extension axis of the grip is α, where α is greater than or equal to 120 degrees and less than or equal to 160 degrees.

In some examples, the magazine is inclined relative to the first direction.

In some examples, in a side view of the cordless fastening tool, the magazine and the battery pack do not overlap.

In some examples, the ratio of the length B1 to the length B2 is greater than or equal to 0.65 and less than or equal to 0.75.

In some examples, the ratio of the distance L3 to the distance L4 is greater than or equal to 0.2 and less than or equal to 0.5.

A cordless fastening tool includes a housing; a magazine configured to accommodate fasteners; a firing device configured to guide the fasteners along a first direction; a battery pack; and a battery pack mounting portion connected to the housing and configured to detachably support the battery pack. The battery pack is configured to be mounted to the battery pack mounting portion along a second direction. Along the left and right direction, the length of the battery pack is B1, the length of the cordless fastening tool is B2, and the ratio of B1 to B2 is greater than or equal to 0.6 and less than or equal to 0.8.

In some examples, in a side view of the cordless fastening tool, the magazine and the battery pack do not overlap.

A cordless fastening tool includes a housing; a magazine configured to accommodate fasteners; a firing device configured to guide the fasteners along a first direction; a battery pack; and a battery pack mounting portion connected to the housing and configured to detachably support the battery pack. The battery pack is configured to be mounted to the battery pack mounting portion along a second direction. The housing includes a grip, the grip extends along a third direction, the first direction and the third direction form a first plane, and an included angle between the second direction and the first plane is greater than or equal to 70 degrees and less than or equal to 90 degrees.

In some examples, the included angle between the second direction and the first plane is greater than or equal to 80 degrees and less than or equal to 90 degrees.

In some examples, in a side view of the cordless fastening tool, the magazine and the battery pack do not overlap.

### BRIEF DESCRIPTION OF DRAWINGS

FIG. 1 is a perspective view of a cordless fastening tool according to a specific example of the present application.
FIG. 2 is a side view of a cordless fastening tool in use according to a specific example of the present application.
FIG. 3 is a view illustrating the structures inside the housing of a cordless fastening tool according to a specific example of the present application.
FIG. 4 is a schematic view illustrating that a battery pack and a battery pack mounting portion in a cordless fastening tool are separated according to a specific example of the present application.
FIG. 5 is a side view of a cordless fastening tool in a standing state according to a specific example of the present application.
FIG. 6 is a rear view of a cordless fastening tool in a standing state according to a specific example of the present application.

### DETAILED DESCRIPTION

The present application is described hereinafter in conjunction with drawings and examples.

In the description of the present application, the terms "joined", "connected", and "fixed" are to be understood in a broad sense unless otherwise expressly specified and limited. For example, the term "connected" may refer to "fixedly connected", "detachably connected", or "integrated", may refer to "mechanically connected" or "electrically connected", may refer to "connected directly" or "connected indirectly through an intermediary", or may refer to "connected inside two elements" or "an interaction relation between two elements".

In the present application, unless otherwise expressly specified and limited, when a first feature is described as "above" or "below" a second feature, the first feature and the second feature may be in direct contact, or the first feature and the second feature may be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this example, orientations or position relations indicated by terms such as "above", "below", "left", and "right" are based on the drawings. These orientations or position relations are intended only to facilitate the description and simplify the operation and not to indicate or imply that a device or element referred to must have such particular orientations or must be configured or operated in such particular orientations. Thus, these orientations or position relations are not to be construed as limiting the present application. In addition, the terms "first" and "second" are only used for distinguishing between descriptions and have no special meanings.

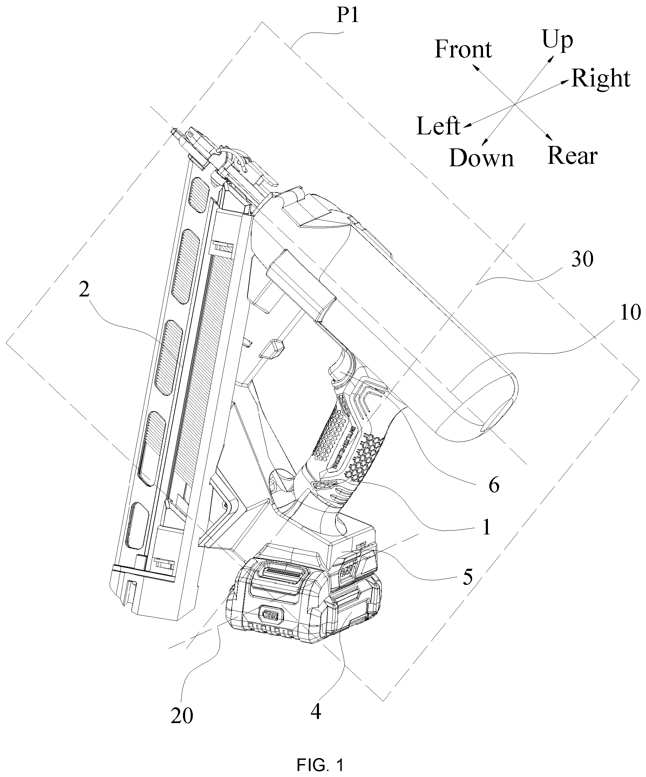

This example provides a cordless fastening tool, which may be a nail gun. As shown in FIGS. 1 to 6, this example is described using the case where the cordless fastening tool is the nail gun as an example. Unless otherwise specified below, the orientations such as up, down, left, right, front, and rear all refer to the orientations of the cordless fastening tool relative to the user when the cordless fastening tool is in use.

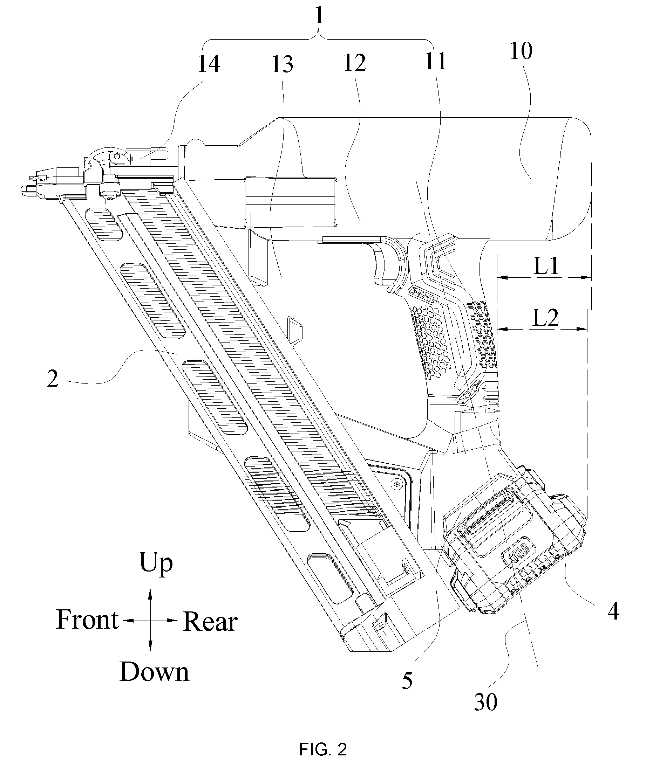

As shown in FIGS. 1 to 3, the cordless fastening tool includes a housing 1, a magazine 2, a firing device 3, a battery pack mounting portion 5, a battery pack 4, and a trigger 6. The firing device 3 is mounted in the housing 1, the magazine 2 is connected to the housing 1 and is configured to accommodate fasteners, and the fasteners may be collated nails. The battery pack mounting portion 5 is connected to the housing 1, the battery pack 4 is detachably connected to the battery pack mounting portion 5, and the battery pack 4 is configured to supply power to the firing device 3. When the battery pack 4 is mounted on the battery pack mounting portion 5, the battery pack 4 is mechanically connected to the housing 1 and electrically connected to the firing device 3 at the same time. The trigger 6 is configured to control whether the firing device 3 is powered on or not. The cordless fastening tool may have an operating state and a standing device. As shown in FIG. 1, the cordless fastening tool is in the standing state. In the standing state, the downwardly disposed surface of the battery pack 4 serves as a support for the cordless fastening tool so that the cordless fastening tool can be supported on a resting surface. In other examples, in a solution where the magazine 2 is relatively long along the up and down direction, the magazine 2 and an edge of the battery pack 4 may be used together as a support for the cordless fastening tool in the standing state. As shown in FIG. 2, the cordless fastening tool is in use. When the cordless fastening tool is in use, the user holds the housing 1, the battery pack 4 supplies power to the firing device 3, and the firing device 3 can guide the fasteners so that the fasteners in the magazine 2 are discharged forward at a certain speed.

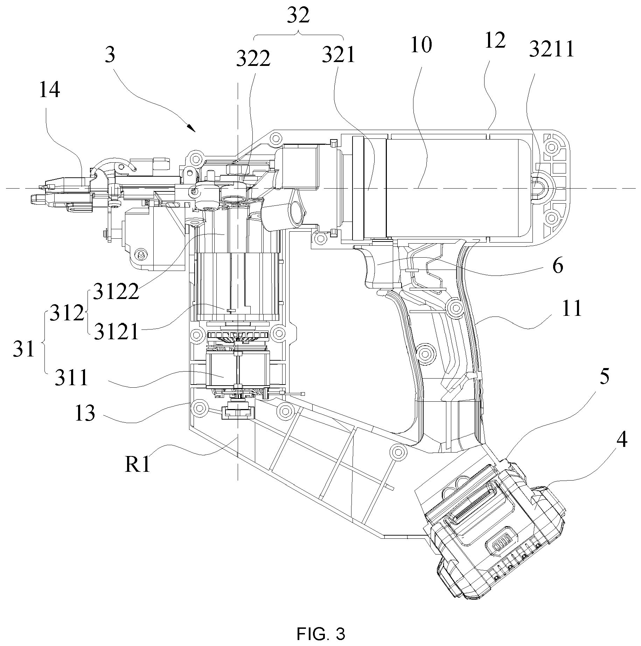

In some examples, as shown in FIGS. 1 to 3, the housing 1 is formed with a first accommodation portion 12, a second accommodation portion 13, and a grip 11. The first accommodation portion 12 substantially extends along a first direction 10, and the first direction 10 is the front and rear direction. The second accommodation portion 13 and the grip 11 are both disposed below the first accommodation portion 12, and the grip 11 is located behind the second accommodation portion 13. The grip 11 is configured to be held by the user when in use, and the battery pack mounting portion 5 is connected to an end of the grip 11 facing away from the first accommodation portion 12. The trigger 6 is disposed on the grip 11 so that the user can operate the trigger 6 while holding the tool with one hand. In this example, the trigger 6 is disposed in the upper end region of the grip 11. As shown in FIG. 3, the first accommodation portion 12 and the second accommodation portion 13 connect with each other at the junction thereof and extend to form a firing end 14. The firing device 3 includes a power output mechanism 31 and a cylinder mechanism 32. The cylinder mechanism 32 is disposed in the first accommodation portion 12, and the power output mechanism 31 is accommodated in the second accommodation portion 13. The second accommodation portion 13 is located slightly to the right below the first accommodation portion 12, while the magazine 2 is located on the left side of the first accommodation portion 12. In some examples, the magazine 2 may extend along a direction perpendicular to the first direction 10. As shown in FIG. 2, in some examples, for example, in a 15 gauge (diameter measurement unit) model, to ensure that the magazine 2 has a sufficient length, the magazine 2 is inclined relative to the first direction 10 (that is, the front and rear direction). In other examples, the nail gun may be a 16 gauge model, an 18 gauge model, or the like, which is not limited here.

As shown in FIG. 3, the cylinder mechanism 32 includes a cylinder 321 and a firing pin assembly 322. The cylinder 321 includes a cylinder block that is selectively sealable and a piston that can move along the first direction 10. The firing pin assembly 322 extends along the first direction 10 and is connected to the piston. The piston and the firing pin assembly 322 can reciprocate along the first direction 10 and compress the gas in the cylinder block. The power output mechanism 31 includes a motor 311 and a transmission assembly 312. The motor 311 can output rotational motion. An input end of the transmission assembly 312 is connected to an output end of the motor 311. The transmission assembly 312 can selectively engage in transmission with or disengage from the firing pin assembly 322. The working principle of the cordless fastening tool is described below. The user triggers the trigger 6 to power on the firing device 3, and the motor 311 starts to rotate. In the case where the transmission assembly 312 engages in transmission with the firing pin assembly 322, the motor 311 drives the transmission assembly 312 to rotate, and the transmission assembly 312 drives the firing pin assembly 322 to move rearward in the first direction 10 so that the piston compresses the gas in the cylinder block, thereby forming a high-pressure state in the cylinder block. Then, in the case where the transmission assembly 312 and the firing pin assembly 322 are disengaged (that is, no longer engaged in transmission), the high-pressure gas in the cylinder block pushes the piston and the firing pin forward along the first direction 10. During this process, the firing pin assembly 322 drives the fastener in the magazine 2 out from the firing end 14 along the first direction 10, thereby completing a nailing cycle. The firing device 3 can continuously drive out fasteners by repeating the preceding actions.

In some examples, as shown in FIG. 3, an air inlet is disposed on the cylinder block, and the air inlet can be selectively opened or closed. Before the cordless fastening tool is used, an inflation port 3211 is opened, a certain amount of gas is introduced into the cylinder block, and then the inflation port 3211 is closed so that it is ensured that the cylinder block is sealed, and the gas in the cylinder block can push the piston to move forward. When the cordless fastening tool is no longer in use, the gas in the cylinder block may be discharged through the inflation port 3211.

In some examples, as shown in FIG. 3, the transmission assembly 312 includes a gearbox 3121 and a drive gear 3122. The gearbox 3121 is connected to the output end of the motor 311. The gearbox 3121 is configured to be a reduction drive. Along the circumferential direction of the drive gear 3122, a portion of the drive gear 3122 is provided with gear teeth, and the other portion of the drive gear 3122 has a smooth surface. The firing pin assembly 322 is provided with a rack section. In the case where the portion with gear teeth on the drive gear 3122 rotates to the firing pin assembly 322, the gear teeth mesh with the rack section so that the transmission assembly 312 can engage in transmission with the firing pin assembly 322, and then the firing pin assembly 322 and the piston compress the gas in the cylinder block. In the case where the smooth surface of the drive teeth rotates to the firing pin assembly 322, the drive gear 3122 does not mate with the firing pin assembly 322, so the firing pin assembly 322 can be pushed by the high-pressure gas in the cylinder 321 to move along the first direction 10. In other examples, the transmission assembly 312 may further include a clutch, such as a torque limiting clutch or a one-way clutch. The clutch may be any one of the torque limiting clutch or the one-way clutch and is not limited here.

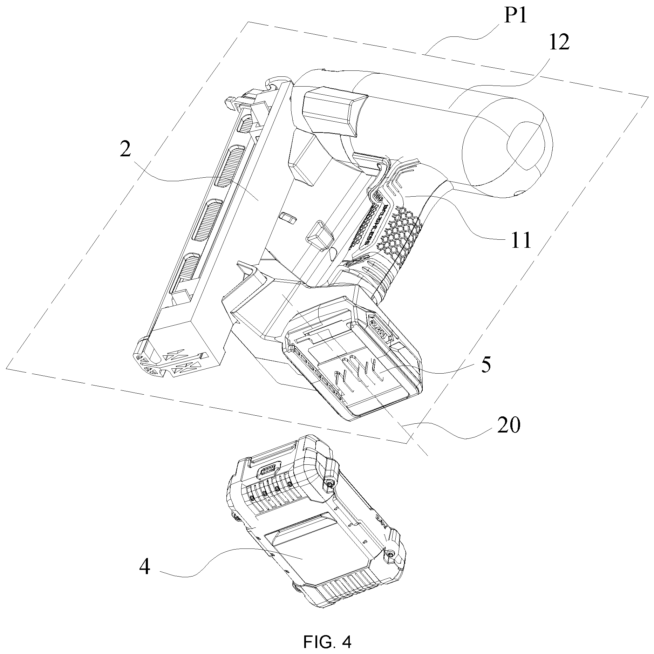

As shown in FIGS. 1 and 4, the battery pack 4 is substantially a rectangular parallelepiped, and the insertion direction of the battery pack 4 is the length direction of the battery pack 4. In the related art, the battery pack 4 is mounted on the battery pack mounting portion 5 through insertion approximately along the front and rear direction of the cordless fastening tool, so the support center of the battery pack 4 in the front and rear direction is closer to the rear, while the center of a gas structure of the cordless fastening tool is closer to the front, resulting in relatively poor stability of the cordless fastening tool when standing.

In this regard, in some examples, as shown in FIGS. 1 and 4, the battery pack 4 can be mounted on the battery pack mounting portion 5 through insertion along a second direction 20, and the second direction 20 is perpendicular to the first direction 10. That is, when the cordless fastening tool is in the standing state, the direction in which the battery pack 4 is longer is configured to be perpendicular to the front and rear direction of the tool (that is, the first direction 10). Therefore, under the condition that other structures remain unchanged, the dimension of the battery pack 4 along the front and rear direction of the tool is reduced. That is, the support center of the battery pack 4 is moved forward. That is, the support center of the battery pack 4 is made to coincide with or be as close as possible to the center of gravity of other structures on the upper part of the tool, thereby improving the stability of the tool in the standing state. In addition, the dimension of the battery pack 4 along the front and rear direction is reduced, thereby greatly alleviating the position interference between the battery pack 4 and the wrist of the user using the tool and making it convenient for the user to use the tool.

In some examples, as shown in FIGS. 1, 4, and 5, the grip 11 extends along a third direction 30, the first direction 10 and the third direction 30 form a first plane P1, and the second direction 20 is perpendicular to the first plane P1. The battery pack 4 is mounted on the battery pack mounting portion 5 through insertion along the left and right direction of the cordless fastening tool so that the battery pack 4 has a larger support length in the left and right direction, thereby improving the support stability of the cordless fastening tool in the standing state along the left and right direction. In this example, in the case where the cordless fastening tool is in the standing state, the dimension of the battery pack 4 along the left and right direction is greater than the dimension of the battery pack 4 along the front and rear direction, which is greater than the dimension of the battery pack 4 along the up and down direction so that the surface of the battery pack 4 used for support is the largest surface of the battery pack 4, thereby improving the support stability of the tool in the standing state. In other examples, the battery pack 4 may be mounted on the battery pack mounting portion 5 through insertion in any other direction within a plane perpendicular to the front and rear direction, which is not limited here. In some examples, the included angle formed by the second direction 20 and the first plane P1 is greater than or equal to 70 degrees and less than or equal to 90 degrees. In some examples, the included angle formed by the second direction 20 and the first plane P1 is greater than or equal to 80 degrees and less than or equal to 90 degrees. In this manner, the battery pack 4 can also have a larger support length in the left and right direction, thereby improving the support stability of the cordless fastening tool in the standing state along the left and right direction.

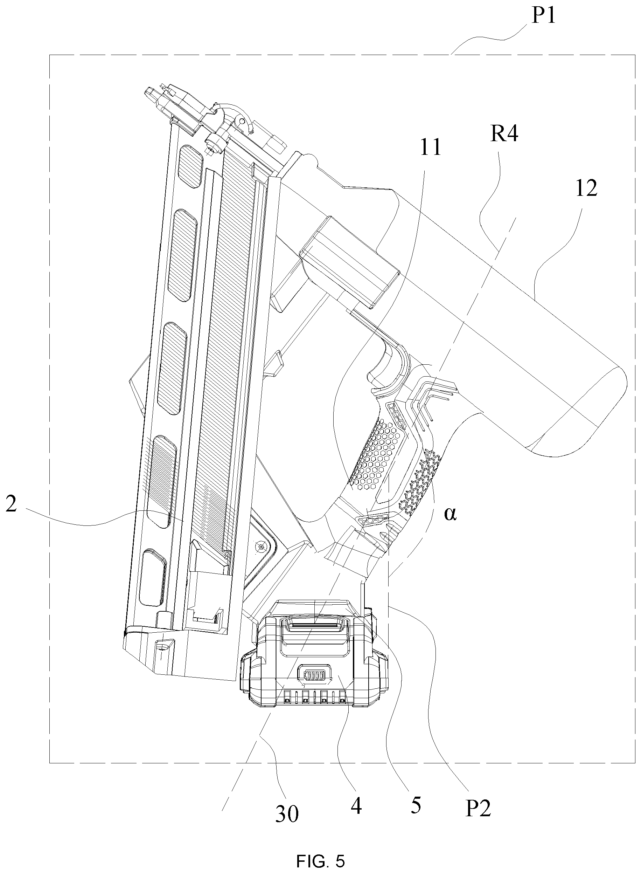

In this example, as shown in FIG. 5, in the side view of the cordless fastening tool, the magazine 2 and the battery pack 4 do not overlap. That is, the battery pack 4 does not interfere with the magazine 2 when the battery pack 4 is inserted or removed along the left and right direction. In this example, the magazine 2 may be inserted and removed from left to right or from right to left, which may be set according to actual requirements and is not limited here.

In some examples, as shown in FIG. 2, the firing end 14 extends along the first direction 10 and away from the cordless fastening tool, and the length L1 of the portion of the first accommodation portion 12 protruding from the grip 11 is greater than or equal to the length L2 of the portion of the battery pack 4 protruding from the grip 11. In this manner, the center of gravity of the entire cordless fastening tool is closer to the front along the front and rear direction and closer to the top along the up and down direction, that is, the center of gravity of the entire tool is closer to the position of the trigger 6 so that the user has a better operating feel when using the cordless fastening tool. In addition, on this basis, in this example, the battery pack 4 is configured to be inserted along a direction perpendicular to the first direction 10 so that the length L2 of the portion of the battery pack 4 protruding from the grip 11 can be reduced correspondingly, and the length L1 of the portion of the first accommodation portion 12 protruding from the grip 11 can be reduced correspondingly, thereby making the structure of the cordless fastening tool along the front and rear direction more compact.

In some examples, as shown in FIG. 2, the length L2 of the portion of the battery pack 4 protruding from the grip 11 is less than or equal to 60 mm. In some examples, the length L2 of the portion of the battery pack 4 protruding from the grip 11 is less than or equal to 52 mm. In this manner, the length of the portion of the battery pack 4 protruding from the grip 11 can be reduced as much as possible, thereby reducing the interference between the battery pack 4 and the wrist of the user and allowing the user to have a better operating experience during usage at certain angles.

In some examples, as shown in FIG. 5, in the case where the cordless fastening tool is in the standing state, the included angle between a rear side surface P2 of the battery pack 4 and an extension axis R4 of the grip 11 is α, and α is greater than or equal to 120 degrees and less than or equal to 160 degrees. In the case where the user holds the grip 11 and moves the wrist to drive nails at different angles, α is set within this larger angle range so that the movable range of the wrist of the user can be increased, thereby reducing the interference between the battery pack 4 and the wrist of the user when the tool works at a specific angle and improving the operating experience of the user. In this example, the battery pack is a 1P battery pack. In other examples, the battery pack may be a 2P battery pack, a 3P battery pack, or the like, which has a larger dimension than the 1P battery pack. No limitation is made here.

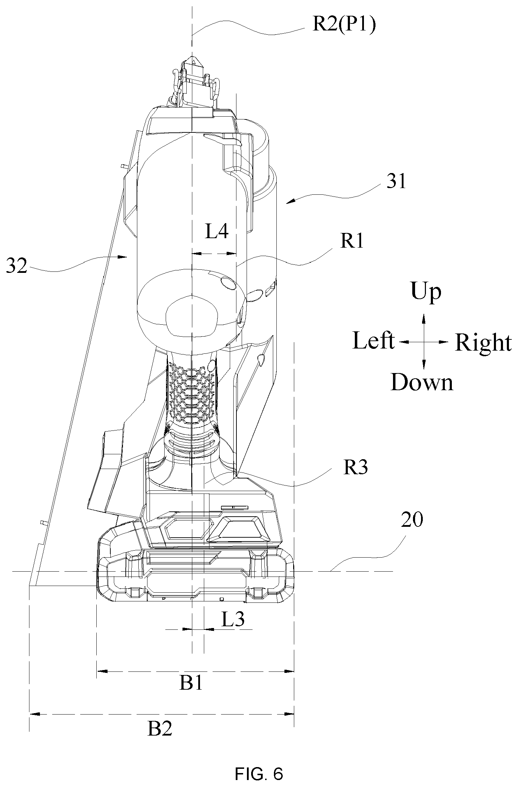

In some examples, as shown in FIGS. 3 and 6, a first rotation axis R1 of the motor 311 is defined, that is, an output shaft of the motor 311 is the first rotation axis R1, the housing 1 has a housing centerline R2 along the left and right direction, and the battery pack 4 has a battery pack centerline R3 along the left and right direction. The first rotation axis R1 and the battery pack centerline R3 are located on the same side of the housing centerline R2 so that the support center of the battery pack 4 along the left and right direction is closer to or coincides with the center of gravity of the structure (the firing device 3) on the upper part of the cordless fastening tool along the left and right direction. In this manner, the cordless fastening tool in the standing state can be more stably supported along the left and right direction. The distance between the battery pack centerline R3 and the housing centerline R2 is L3, the distance between the first rotation axis R1 and the housing centerline R2 is L4, and the ratio of L3 to L4 is greater than or equal to 0 and less than or equal to 0.5. On the one hand, it can be ensured that the support center of the battery pack 4 and the center of gravity of the firing device 3 are located on the same side of the housing centerline R2. On the other hand, the center of gravity of the entire cordless fastening tool can be prevented from being too skewed, thereby avoiding the problem of obvious left-right imbalance of the tool when the user uses the tool. Optionally, the ratio of L3 to L4 may be 0.1, 0.2, 0.3, or the like, which is not limited here. In this example, as shown in FIG. 6, the lighter magazine 2 is located on the left side of the housing 1, the heavier power output mechanism 31 is located on the right side of the housing 1, and the battery pack 4 is located on the right side of the entire cordless fastening tool so that the support center of the battery pack 4 can coincide as much as possible with the center of gravity of the structure on the upper part of the entire cordless fastening tool.

In some examples, the length of the battery pack in the standing state along the left and right direction is greater than or equal to 60 mm and less than or equal to 160 mm. In some examples, the length of the battery pack in the standing state along the left and right direction is greater than or equal to 80 mm and less than or equal to 155 mm. In some examples, the length of the battery pack in the standing state along the left and right direction is greater than or equal to 100 mm and less than or equal to 150 mm. In some examples, the length of the battery pack in the standing state along the left and right direction is greater than or equal to 120 mm and less than or equal to 145 mm. As shown in FIGS. 5 and 6, along a direction perpendicular to the first plane P1, the length of the battery pack 4 is B1, the length of the cordless fastening tool is B2, and the ratio of B1 to B2 is greater than or equal to 0.6 and less than or equal to 0.8. By setting the ratio of B1 to B2 within the preceding range, the battery pack 4 has a sufficiently large support length along the left and right direction, thereby improving the support stability of the cordless fastening tool in the standing state.

## Claims

1. A cordless fastening tool, comprising:
a housing (1);
a magazine (2) configured to accommodate fasteners;
a firing device (3) configured to guide the fasteners along a first direction (10);
a battery pack (4); and
a battery pack mounting portion (5) connected to the housing (1) and configured to detachably support the battery pack (4);
wherein the battery pack (4) is configured to be mounted to the battery pack mounting portion (5) along a second direction (20) perpendicular to the first direction (10).

2. The cordless fastening tool of claim 1, wherein the housing (1) comprises a grip (11), the grip (11) extends along a third direction (30), the first direction (10) and the third direction (30) form a first plane (P1), and the second direction (20) is perpendicular to the first plane (P1).

3. The cordless fastening tool of claim 1, wherein the housing (1) comprises a grip (11), the grip (11) extends along a third direction (30), and the first direction (10) and the third direction (30) form a first plane (P1); and along a direction perpendicular to the first plane (P1), a length of the battery pack (4) is B1, a length of the cordless fastening tool is B2, and a ratio of the length B1 to the length B2 is greater than or equal to 0.6 and less than or equal to 0.8.

4. The cordless fastening tool of claim 1, comprising a motor (311), wherein a first rotation axis (R1) of the motor (311) is defined, the housing (1) has a housing centerline (R2) along a left and right direction, the battery pack (4) has a battery pack centerline (R3) along the left and right direction, and the first rotation axis (R1) and the battery pack centerline (R3) are located on a same side of the housing centerline (R2) along the left and right direction.

5. The cordless fastening tool of claim 4, wherein a distance between the battery pack centerline (R3) and the housing centerline (R2) is L3, a distance between the first rotation axis (R1) and the housing centerline (R2) is L4, and a ratio of the distance L3 to the distance L4 is greater than or equal to 0 and less than or equal to 0.5.

6. The cordless fastening tool of any one of claims 1 to 5, wherein the housing (1) comprises a first accommodation portion (12) and the grip (11), the first accommodation portion (12) extends along the first direction (10), the firing device (3) is at least partially accommodated in the first accommodation portion (12), an end of the grip (11) is connected to the first accommodation portion (12), and the battery pack mounting portion (5) is connected to another end of the grip (11).

7. The cordless fastening tool of claim 6, wherein along the first direction (10) and away from a firing end of the cordless fastening tool, a length L1 of a portion of the first accommodation portion (12) protruding from the grip (11) is greater than or equal to a length L2 of a portion of the battery pack (4) protruding from the grip (11).

8. The cordless fastening tool of claim 6, wherein along the first direction (10) and away from a firing end of the cordless fastening tool, a length of a portion of the battery pack (4) protruding from the grip (11) is L2, wherein the length L2 is less than or equal to 60 mm.

9. The cordless fastening tool of claim 6, wherein in a case where the cordless fastening tool is standing, an included angle between a rear side surface (P2) of the battery pack (4) and an extension axis (R4) of the grip (11) is α, wherein the included angle α is greater than or equal to 120 degrees and less than or equal to 160 degrees.

10. The cordless fastening tool of any one of claims 1 to 5, wherein the magazine (2) is inclined relative to the first direction (10).

11. The cordless fastening tool of claim 10, wherein in a side view of the cordless fastening tool, the magazine (2) and the battery pack (4) do not overlap.

12. The cordless fastening tool of claim 2, wherein an included angle between the second direction (20) and the first plane (P1) is greater than or equal to 70 degrees and less than or equal to 90 degrees.

13. The cordless fastening tool of claim 2, wherein an included angle between the second direction (20) and the first plane (P1) is greater than or equal to 80 degrees and less than or equal to 90 degrees.

14. The cordless fastening tool of claim 3, wherein the ratio of the length B1 to the length B2 is greater than or equal to 0.65 and less than or equal to 0.75.

15. The cordless fastening tool of claim 5, wherein the ratio of the distance L3 to the distance L4 is greater than or equal to 0.2 and less than or equal to 0.5.

16. A cordless fastening tool, comprising:
a housing (1);
a magazine (2) configured to accommodate fasteners;
a firing device (3) configured to guide the fasteners along a first direction (10);
a battery pack (4); and
a battery pack mounting portion (5) connected to the housing (1) and configured to detachably support the battery pack (4);
wherein the battery pack (4) is configured to be mounted to the battery pack mounting portion (5) along a second direction (20); and
along a left and right direction, a length of the battery pack (4) is B1, a length of the cordless fastening tool is B2, and a ratio of the length B1 to the length B2 is greater than or equal to 0.6 and less than or equal to 0.8.

17. The cordless fastening tool of claim 16, wherein in a side view of the cordless fastening tool, the magazine (2) and the battery pack (4) do not overlap.

18. A cordless fastening tool, comprising:
a housing (1);
a magazine (2) configured to accommodate fasteners;
a firing device (3) configured to guide the fasteners along a first direction (10);
a battery pack (4); and
a battery pack mounting portion (5) connected to the housing (1) and configured to detachably support the battery pack (4);
wherein the battery pack (4) is configured to be mounted to the battery pack mounting portion (5) along a second direction (20); and
the housing (1) comprises a grip (11), the grip (11) extends along a third direction (30), the first direction (10) and the third direction (30) form a first plane (P1), and an included angle between the second direction (20) and the first plane (P1) is greater than or equal to 70 degrees and less than or equal to 90 degrees.

19. The cordless fastening tool of claim 18, wherein the included angle between the second direction (20) and the first plane (P1) is greater than or equal to 80 degrees and less than or equal to 90 degrees.

20. The cordless fastening tool of claim 18, wherein in a side view of the cordless fastening tool, the magazine (2) and the battery pack (4) do not overlap.
